# EUROPEAN PATENT SPECIFICATION

(11) **EP 2 544 488 B1**
(45) Date of publication and mention of the grant of the patent: **06.08.2014**
(21) Application number: 11172943.0
(22) Date of filing: 06.07.2011
(51) Int. Cl.: H04W 48/20

(54) **Wireless device for selecting connection target based on signal quality, system and method thereof**
Drahtlose Vorrichtung zur Auswahl des Verbindungsziels basierend auf Signalqualität, sowie System und Verfahren dafür
Dispositif sans fil permettant de sélectionner une cible de connexion basée sur la qualité du signal, système et procédé associés

(43) Date of publication of application: 09.01.2013
(73) Proprietor: Moxa Inc., New Taipei City 231 (TW)
(72) Inventor: Lee, Shih Chang, 231 New Taipei City (TW); Liao, Chien Han, 231 New Taipei City (TW)
(74) Representative: Lang, Christian

(56) References cited:
- EP-A1- 1 401 229
- EP-A1- 2 180 736
- GB-A- 2 421 875

## Description

### Field of Invention

The invention relates to a wireless device, system, and method of establishing a connection, in particularly, to a wireless device that selects a connection target to connect based on signal quality and the system and method thereof.

### Related Art

Wireless network is designed to allow any station connecting to any AP with same network identity. Due to this attribute, it is impossible to specify the connecting target of station while there are multiple APs with same identity. Therefore, to establish a pre-designed network topology, network identity of each wireless connection must to be independent.

Currently, the most intuitive method to establish a pre-designed linear network topology is to manually configure all network identities as mentioned above. It is only acceptable for simple environment and static topology, e.g., backbone network. However, for certain wireless network application, e.g., railway application, the linear topology is dynamic and could be changed at anytime. For such scenario, dynamic topology update is required. As the result, manual configuration method is not acceptable anymore.

In summary, the prior art cannot automatically build up a stable linear topology compliant with relative positions of stations and APs in a dynamical and complicated environment. It is necessary to provide a better solution.

GB 2 421 875 A discloses a mobile communication system having an infrastructure which includes a plurality of base stations, a plurality of mobile stations each of which is operable to communicate with a selected one of the base stations, a mobile terminal operably coupled to at least a first one of the mobile stations and a second one of the mobile stations to provide a communication link to at least one of the base stations, and a mobile controller which is operable to send instruction messages to the mobile stations regarding connectivity with the base stations. The mobile terminal, the mobile controller and the first and second mobile stations may be carried on a moving object such as a person or a vehicle, e.g. train or aeroplane. Initially, the mobile station is served by the base station. As the mobile station moves further into the cell covered by the base station, the signal strength of a received signal from the base station increases. The control device can direct the mobile station to search for other available base stations to be a serving base station. Assuming that the mobile station continues to receive a good quality of service from the base station, the mobile station may search continuously or, if the base station is also determined to provide the best quality of service for the mobile station, the mobile station may be directed also to stay on the base station as serving base station.

### SUMMARY OF THE INVENTION

In view of the foregoing, the invention discloses a wireless device that automatically selects a connection target based on signal quality without manual modifications. The invention also discloses the system and method thereof.

The disclosed system of selecting a connecting target based on signal quality includes: a first wireless device and a second wireless device. The first wireless device detects signal quality of all wireless devices. It further selects a target device having the best signal quality, and duration of the signal quality between the target device and the first wireless device is not less than a threshold reaching a first specific time. The first wireless device transmits a request packet containing a protocol request message. The second wireless device is a target device for detecting signal quality of all wireless devices. It selects a candidate device having the best signal quality and duration of the signal quality between the candidate device and the second wireless device is not less than a threshold reaching the first specific time. The second wireless device receives the protocol request message sent from the first wireless device. After generating the corresponding protocol response message according to whether the candidate device is the first wireless device, a response packet containing the protocol response message is sent back to the first wireless device. If the second wireless device determines that the first wireless device is the candidate device, the protocol response message is a protocol confirmation. If the second wireless device determines that the first wireless device is not the candidate device, the protocol response message is a protocol rejection. If the second wireless device has not found the candidate device, the protocol response message is protocol pending. After checking the protocol response message means protocol confirmation, the first wireless device establishes a connection with the second wireless device. After checking the protocol response message means protocol rejection, the first wireless device prevents selecting the second wireless device as the target device for a certain time, and continuously selects a new target device as the second wireless device. After checking the protocol response message means protocol pending, the first wireless device waits for a certain time, and then resends the request packet to the currently selected second wireless device.

The disclosed wireless device of selecting a connection target based on signal quality includes: a signal quality detecting module, a target selecting module, a transmitting module, a response generating module, and a connection processing module. The signal quality detecting module detects signal quality of all other wireless devices. The target selecting module selects as a candidate device a wireless device having best quality and duration of the signal quality between the candidate device and the wireless device is not less than a threshold reaching the first specific time. The transmitting module transmits a first request packet containing a first protocol request message to the candidate device, receives a first response packet containing a first protocol response message sent from the candidate device, receives a second request packet containing a second protocol request message, and returns a second response packet containing a second protocol response message. The response generating module generates a second protocol response message for protocol confirmation after determining the wireless device transmitting the second request packet as the candidate device, or generates a second protocol response message for protocol rejection after determining the wireless device transmitting the second request packet as not the candidate device, or generates a second protocol response message for protocol pending if no candidate device is selected. The connection processing module establishes a connection with the candidate device transmitting the first protocol confirmation message after checking the first protocol response message as protocol confirmation. If the first protocol response message is protocol rejection, the signal quality detecting module deletes the record of the signal quality of the candidate device, or the target selecting module prevents selecting the wireless device transmitting the first protocol response message as the candidate device, for a certain time. If the first protocol response message is protocol pending, the connection processing module waits for a certain time, and then resends the first request packet via the transmitting module to the candidate device currently selected by the target selecting module.

The disclosed method of selecting a connection target based on signal quality includes the steps of: using a first wireless device to detect signal quality of all other wireless devices; using the first wireless device to select from the other wireless devices a second wireless device having best signal quality and a duration of signal quality between the second wireless device and the first wireless device is not less than a threshold reaching a first specific time; sending a request packet containing a protocol request message from the first wireless device to the second wireless device; using the second wireless device to select from the other wireless devices a candidate device having best signal quality and a duration of signal quality between the candidate device and the second wireless device is not less than a threshold reaching the first specific time; using the second wireless device to generate a protocol response message according to whether the first wireless device is the candidate device; sending a response packet containing a protocol response message from the second wireless device to the first wireless device; and establishing a connection between the first wireless device and the second wireless device after the first wireless device checks the protocol response message as protocol confirmation.

The disclosed system, wireless device and method differ from the prior art in that the invention uses the wireless device to select a candidate device having best signal quality and a duration of signal quality between the candidate device and the wireless device is not less than a threshold reaching a specific time. The two wireless devices can establish a connection only if the selected candidate device also selects the wireless device. This solves the problems in the prior art, relative-position forming, dynamically updating, and stabilizing the linear topology without manual modifications.

### BRIEF DESCRIPTION OF THE DRAWINGS

The invention will become more fully understood from the detailed description given herein below illustration only, and thus is not limitative of the present invention, and wherein:
FIG. 1 shows the system for selecting a connection target based on signal quality according to the invention.
FIG. 2 shows the elements in a wireless device for selecting a connection target based on signal quality according to the invention.
FIG. 3 is a flowchart of the method for selecting a connection target based on signal quality according to the invention.
FIG. 4 is a schematic view of the configuration of wireless devices in the embodiments.
FIG. 5 is a flowchart of generating the protocol response message according to the invention.
FIGS. 6A and 6B are schematic views of changing the order of carriages in an embodiment of the invention.
FIG. 7A is a flowchart of checking the protocol response message according to the invention.
FIG. 7B is a flowchart of selecting the connection target based on signal quality according to the invention.
FIG. 8 is another flowchart of selecting the connection target based on signal quality according to the invention.

### DETAILED DESCRIPTION OF THE INVENTION

The present invention will be apparent from the following detailed description, which proceeds with reference to the accompanying drawings, wherein the same references relate to the same elements.

The invention allows a wireless device to quickly determine the most suitable connection target device and automatically connect to the target device. Without modifying any connection parameter of the wireless device, the wireless network topology using the invention can be stabilized. Generally speaking, the wireless devices referred herein are applied to establish a linear topology. However, the invention is not restricted to this possibility only.

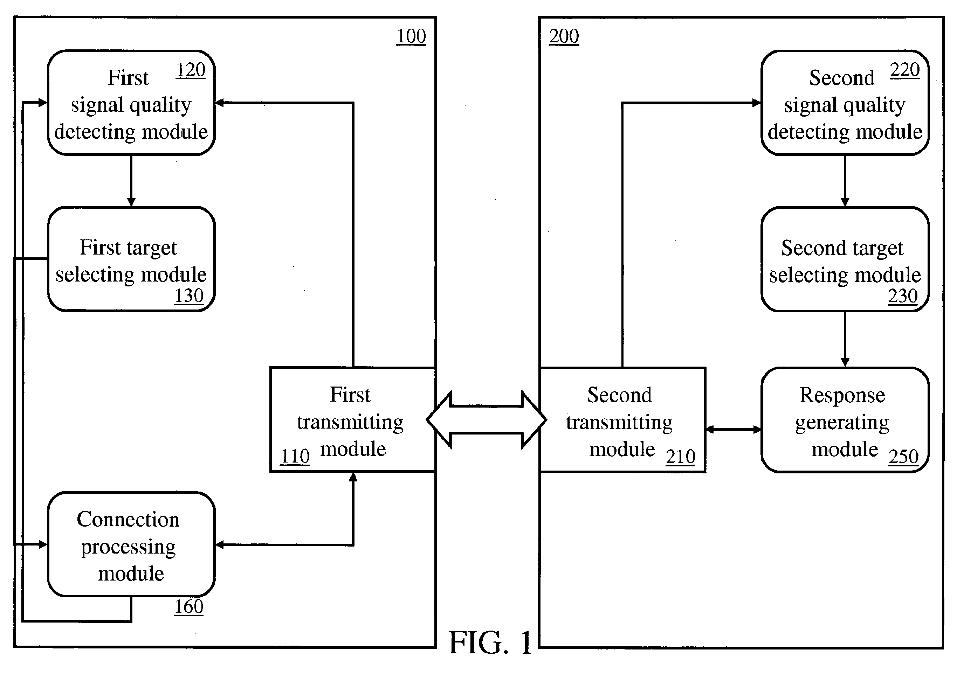

To utilize the invention, the wireless network environment must have at least two disclosed wireless devices. FIG. 1 shows the structure of the disclosed system of the invention. As shown in the drawing, the disclosed system includes a first wireless device 100 and a second wireless device 200. In practice, any wireless device of the invention is equipped with the capabilities of all modules in the first wireless device 100 and the second wireless device 200 simultaneously.

To find out the most suitable target device (the second wireless device 200 in FIG. 1) and to establish connection with it, the first wireless device 100 includes a first transmitting module 110, a first signal quality detecting module 120, a first target selecting module 130, and a connection processing module 160.

The first transmitting module 110 transmits and receives wireless packets, including but not limited to probe or beacon packets. This behavior is the same as conventional wireless devices. The first transmitting module 110 also transmits a first request packet containing a protocol request message to the target device, and receives a first response packet returned from the target device.

The first signal quality detecting module 120 evaluates and records signal quality of all other wireless devices in the wireless network, based on the wireless packet received by the fist transmitting module 110. The signal quality detected by the first signal quality detecting module 120 can be the received signal strength indicator (RSSI). However, the invention is not limited to this example. Any data that can be used to determine signal quality can be employed.

The first target selecting module 130 selects one target device from the wireless devices recorded by the first signal quality detecting module 120, such as the second wireless device 200. The wireless device selected as the target device by the first target selecting module 130 has to satisfy three conditions. First, the signal quality of the target device must have the best signal quality among all wireless devices detected by the first signal quality detecting module 120. Secondly, the signal quality of the target device has to be greater than or equal to a threshold. Thirdly, the duration of the signal quality of the target device is not less than a threshold has to reach a specific time. In this specification, a 'first specific time' refers to the required duration for the signal quality of the wireless device to be not less than the threshold.

In order to find out the target device, a table is created by the first target selecting module 130 to record the ID code, signal quality, and duration of wireless devices whose signal quality is not less than a threshold. Among these records, the first target selecting module 130 always check the duration of the record having the best signal quality. If its duration has reached the first specific time, the first target selecting module 130 selects one of the devices of the record as target device (e.g., the second wireless device 200).

After the first target selecting module 130 selects the target device, the connection processing module 160 transmits a first request packet containing a protocol request message via the first transmitting module 110 to the target device. Then the connection processing module 160 receives a first response packet containing a protocol response message returned from the target device.

If the protocol response message contained in the first response packet means 'protocol confirmed', then the connection processing module 160 connects to the target device via the first transmitting module 110. In order to determine whether to actively connect to the target device or passively wait for the connection from the target device, the connection processing module 160 utilizes the device information recorded in the first response packet. The device information referred herein is information that can represent the wireless device, such as the MAC address thereof. However, the device information is not limited to the MAC address. If the device information is the MAC address, the connection processing module 160 can compare the MAC address of the first wireless device 100 and the MAC address of the target device. When the connection processing module 160 determines that the MAC address of the former is larger, the connection processing module 160 actively connects to the target device. When the connection processing module 160 determines that the MAC address of the former is smaller, the connection processing module 160 passively waits the connection from the target device. However, the determining rule used by the connection processing module 160 can be adjusted according to the device information of use, and is not limit to the rule mentioned above.

If the protocol response message means 'protocol rejected', the first wireless device 100 prevents selecting same device as target device for a certain time. The prevention method includes, but not limited in, notifying the first signal quality detecting module 120 to ignore the target device for a certain time while detecting the signal quality, or notifying the first target selecting module 130 to prevent selecting the same device as target device for a certain time.

If the protocol response message means 'protocol pending', then the connection processing module 160 waits for a certain time and then sends the first request containing the first protocol request message via the first transmitting module 110 to the target device currently selected by the first target selecting module 130. It should be mentioned that the first signal quality detecting module 120 and the first target selecting module 130 are still functioning in the meantime. Therefore, the target device to be sent with the first request packet may not be the wireless device that sends the protocol pending message.

It should be emphasized that, although the request/response packet can be in any form, in order to minimize the effort on negotiation and maximize the compatibility with existing network structure, the first transmitting module 110 could add the protocol request message to the message packet used in the conventional wireless network technology (for example but not limited to probe packets) as the request packet. Therefore, regardless running the invention or not, the target device always return a response packet. Therefore, after the first transmitting module 110 receives the first response packet, the connection processing module 160 usually has to check whether the first response packet includes a protocol response message such as 'protocol confirmed', 'protocol rejected', or 'protocol pending'. If the first response packet does not contain a protocol response message, the connection processing module 160 can execute the same procedure as when receiving a protocol rejection. That is, the first signal quality detecting module 120 ignores the target device (e.g., the second wireless device 200) when detecting the signal quality of all wireless devices. Or the first target selecting module 130 is notified to ignore the target device when selecting a new target device.

In fact, the developers of the wireless device 100 could define a private wireless network protocol. The first transmitting module 110 can sent the request packet in the private wireless network protocol to the target device and receive the response packet from the target device. The response packet received by the first transmitting module 110 can include message of 'protocol confirmed', 'protocol rejected', or 'protocol pending' or represents 'protocol confirmed', 'protocol rejected', or 'protocol pending'.

To ensure which wireless device is the most suitable device and to establish connection with it, the second wireless device 200 connects to the most suitable candidate device (e.g., the first wireless device 100). The second wireless device 200 includes a second transmitting module 210, a second signal quality detecting module 220, a second target selecting module 230, and a response generating module 250.

The second transmitting module 210 is similar to the first transmitting module 110, and transmits and receives wireless packets in the prior art periodically. The second transmitting module 210 also receives the second request packet transmitted from any wireless device on the wireless network of the second wireless device 200, and returns a second response packet containing a protocol response message to the wireless device that sends the second request packet.

The second signal quality detecting module 220 is also similar to the first signal quality detecting module 120. The second signal quality detecting module evaluates and records the signal quality of all other wireless devices in the wireless network, based on the wireless packets received by the second transmitting module 210. Generally speaking, the second signal quality detecting module 220 and the first signal quality detecting module 120 simultaneously detect signal quality of wireless devices in the wireless network other than themselves.

The second target selecting module 230 is also similar to the first target selecting module 130. The second target selecting module 230 selects a candidate device from the wireless devices recorded by the second signal quality detecting module 220, such as the first wireless device 100. The wireless device selected by the second target selecting module 230 as the candidate device has to satisfy three conditions. First, the signal quality of the candidate device must have the best signal quality among all wireless devices detected by the second signal quality detecting module 220. Secondly, the signal quality of the candidate device has to be greater than or equal to a threshold. Thirdly, the duration of the signal quality of the candidate device is not less than a threshold has to reach the first specific time.

It should be noted that if none of the wireless devices recorded by the second signal quality detecting module 220 satisfies all the above-mentioned three conditions, the second target selecting module 230 does not select a candidate device until some wireless device satisfies all the three conditions.

The response generating module 250 generates the protocol response message based on the conditions of the candidate device selected by the second target selecting module 230. If the wireless device (e.g., the first wireless device 100) sending the second request packet is the candidate device selected by the second target selecting module 230, the response generating module 250 generates the protocol response message meaning protocol confirmed. If the wireless device sending the second request packet is not the candidate device selected by the second target selecting module 230, the response generating module 250 generates the protocol response message meaning protocol rejected. If the second target selecting module 230 has not selected a candidate device, the response generating module 250 generates the protocol response message meaning protocol pending.

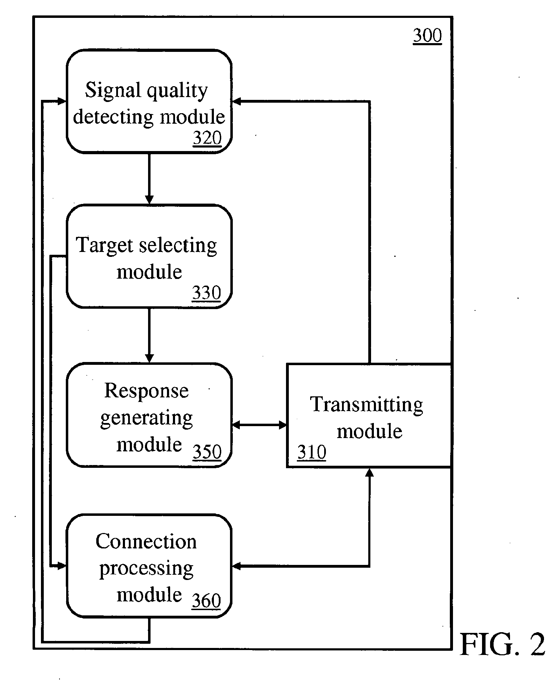

According to the above description, most corresponding modules in the first wireless device 100 and the second wireless device 200 are similar. More explicitly, the first wireless device 100 and the second wireless device 200 have different subsequent processing modules for different packets. Therefore, the first wireless device 100 and the second wireless device 200 can be integrated into one wireless device 300 with both functions in practice. As shown in FIG. 2, the wireless device 300 includes a transmitting module 310, a signal quality detecting module 320, a target selecting module 330, a response generating module 350, and a connection processing module 360. The transmitting module 310 includes all the functions of the first transmitting module 110 and the second transmitting module 210. The signal quality detecting module 320 and the target selecting module 330 are similar to the first signal quality detecting module 120/the second signal quality detecting module 220 and the first target selecting module 130/the second target selecting module 230, respectively. The response generating module 350 and the connection processing module 360 are the same as the response generating module 250 and the connection processing module 160, respectively. Therefore, the modules in FIG. 2 are not explained again.

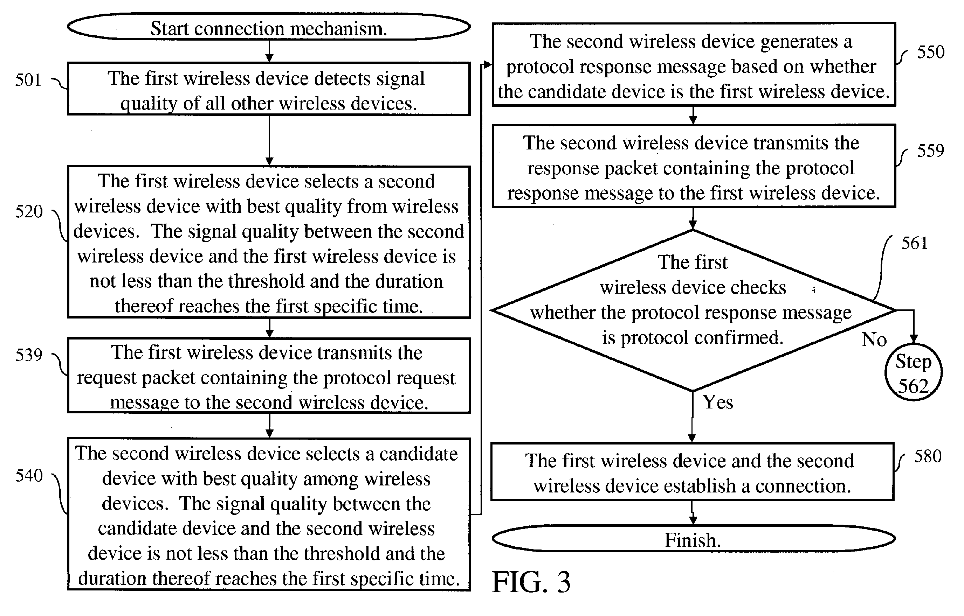

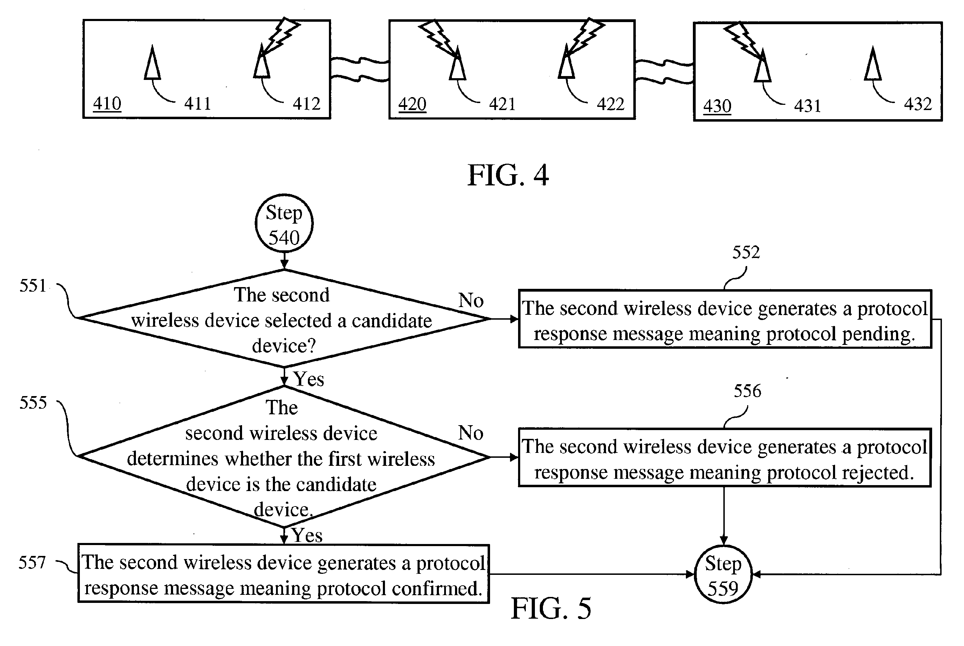

In the following, an embodiment is used to explain the disclosed system and method. Please refer to FIG. 3 for the flowchart of the disclosed method selecting a connection target based on signal quality. In this embodiment, the invention is used on a train. As shown in FIG. 4, the disclosed wireless devices 411, 412, 421, 422, 431 are installed in carriages 410, 420, 430. The wireless device in the left of a carriage establishes a connection with the right wireless device in the left carriage, thereby building up a linear network topology on the train for passengers thereon to use. However, the invention is not restricted to this particular example.

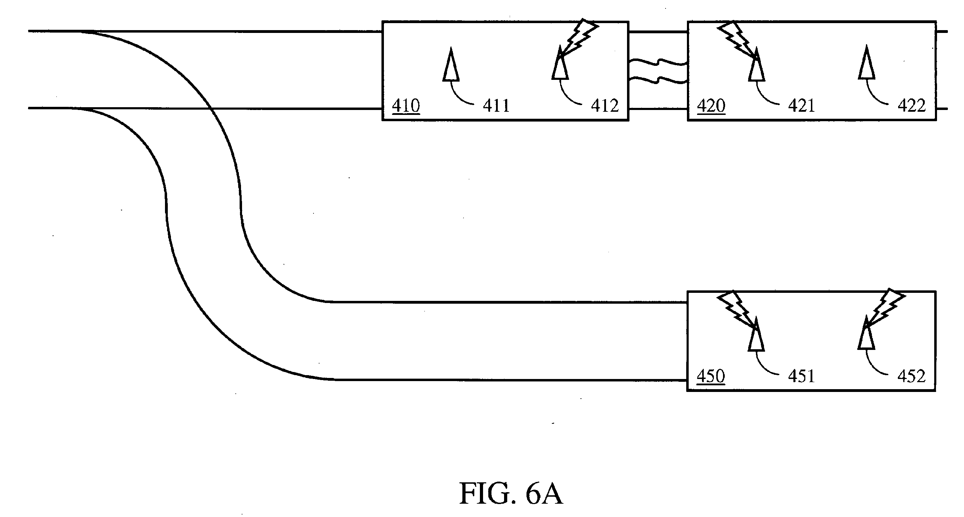

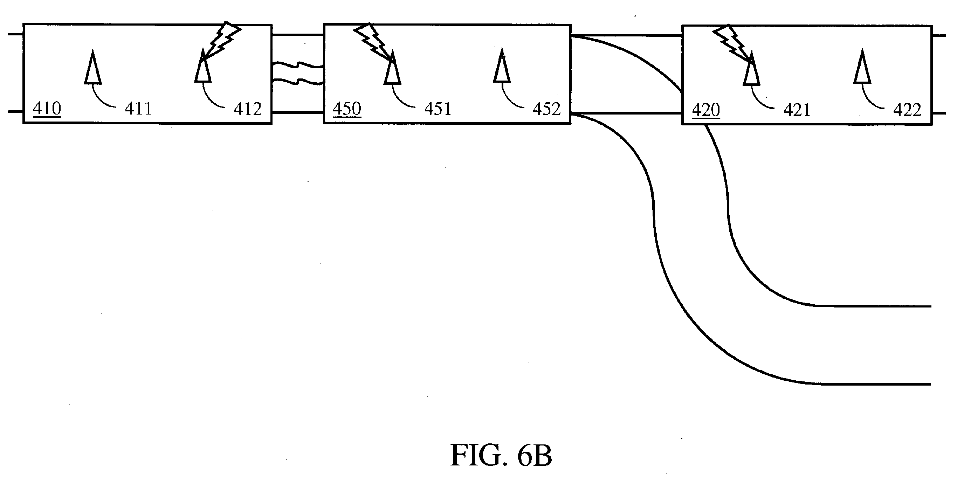

Carriages of a train can be arbitrarily arranged and connected. Suppose the carriages of a train change their orders. As shown in FIG. 6A and FIG. 6B, the originally connected carriage 410 and carriage 420 are separated. Carriage 410 is connected to carriage 450. In the prior art, one needs to modify the connection settings of the last wireless device 412 on carriage 410 and the first wireless device 451 on carriage 450 so that the wireless device 412 and the wireless device 451 can be connected. A train using the invention does not require such modifications of connection settings of the wireless devices thereon.

Please refer to FIG. 4. Suppose carriage 410 and carriage 420 are connected. After the wireless devices on the train start, they try to search other wireless devices and try to establish connections among them. We now use the process of connecting wireless devices in carriage 410 and carriage 420 as an example to explain the invention. Connections of wireless devices in other carriages are the same.

Carriage 410 is provided with two wireless devices: wireless device 411 and wireless device 412. Carriage 420 is also provided with two wireless devices: wireless device 421 and wireless device 422. Carriage 430 is also provided with two wireless devices: wireless device 431 and wireless device 432. Therefore, after wireless devices on the train start, the transmitting modules 310 thereof periodically transmit wireless packets and receive wireless packets from other wireless devices. Such wireless packets can be beacon packets. That is, the wireless device 411 receives at least wireless packets from the wireless device 412. The wireless device 412 receives at least wireless packets from the wireless device 411, the wireless device 421, the wireless device 422, and the wireless device 431. The wireless device 421 receives at least wireless packets from the wireless device 411, the wireless device 412, the wireless device 422, and the wireless device 431. The wireless device 422 receives at least wireless packets from the wireless device 412, the wireless device 421, the wireless device 431, and the wireless device 432.

Afterwards, the signal quality detecting modules 320 of the wireless devices on the train detect the signal quality of other wireless devices based on the wireless packets received by the transmitting modules 310. That is, the wireless device 411 can detect and record the signal quality of the wireless device 412. The wireless device 412 can detect and record the signal quality of the wireless device 411, the wireless device 421, the wireless device 422, and the wireless device 431. The wireless device 421 can detect and record the signal quality of the wireless device 411, the wireless device 412, the wireless device 422, and the wireless device 431. The wireless device 422 can detect and record the signal quality of the wireless device 412, the wireless device 421, the wireless device 431, and the wireless device 432.

Suppose the wireless devices on the train use some appropriate method to adjust wireless signals, such as using an oriented antenna. When the antenna of the wireless device 411 points to the train head (left), the antenna of the wireless device 412 points to carriage 420 (right), the antenna of the wireless device 421 points to carriage 410 (left), the antenna of the wireless device 422 points to carriage 430 (right), the antenna of the wireless device 431 points to carriage 420 (left), and the antenna of the wireless device 432 points to train tail (right), then the wireless device 411 may not possibly receive any wireless packets. The wireless device 412 receives at least wireless packets from the wireless device 421 and the wireless device 431. The wireless device 421 receives at least wireless packet from the wireless device 412. The wireless device 422 receives at least wireless packets from the wireless device 431. Therefore, the wireless device 411 does not record the signal quality of any wireless devices. The wireless device 412 can detect and record the signal quality of the wireless device 421 and the wireless device 431. The wireless device 421 can detect and record the signal quality of the wireless device 412. The wireless device 422 can detect and record the signal quality of the wireless device 431.

The following description supposes the front wireless device 421 of carriage 420 is the first wireless device. In this embodiment, the RSSI is used as the signal quality. After the signal quality detecting module of the wireless device 421 detects the RSSI (signal quality) between the wireless device 421 and other wireless device (step 501), the target selecting module of the wireless device 421 can select a wireless device with the largest RSSI (best signal quality), the signal quality is not less than a threshold, and the duration of the signal quality is not less than the threshold reaching the first specific time (step 520). The selected wireless device is used as the target device (second wireless device). In this embodiment, if the wireless device 421 detects that the wireless device 412 has the best signal quality and the duration for being over a threshold also reaches the first specific time, then the wireless device 421 selects the wireless device 412 as the target device, i.e., the second wireless device of the invention.

After the target selecting module of the wireless device 421 selects the target device, the connection processing module thereof can send a request packet containing a protocol request message via the transmitting module to the target device (step 539). In this embodiment, the request packet is assumed to be a probe request packet. Thus, the wireless device 421 sends a probe request packet containing the protocol request message to the wireless device 412. The connection processing module of the wireless device 421 first packages the protocol request message into the request packet before sending the request packet to the target device. The request packet transmitted by the transmitting module of the wireless device 421 thus includes the protocol request message.

At the same time, the signal quality detecting module of the wireless device 412 also detects the signal quality of other wireless devices. Afterwards, the target selecting module of the wireless device 412 can select a wireless device with the best signal quality, the signal quality is not less than a threshold, and the duration of the signal quality is not less than a threshold reaching the first specific time (step 540). The selected wireless device is used as the candidate device. In this embodiment, suppose the wireless device 412 can detect the signal quality of the wireless device 421 and the wireless device 431. Since the wireless device 421 is closer to the wireless device 412 than the wireless device 431, the one with the best signal quality as detected by the wireless device 412 is the wireless device 421. If the duration of the signal quality of the wireless device 421 as detected by the wireless device 412 is not less than a threshold and reaches the first specific time, the wireless device 412 always selects the wireless device 421, instead of the wireless device 431, as the candidate device regardless whether the duration of the signal quality of the wireless device 431 is not less than a threshold and reaches the first specific time. In practice, the wireless device 421 is a target device for the wireless device 412.

After the transmitting module of the target device (i.e., the wireless device 412) receives the request packet containing the protocol request message sent from the wireless device 421, the response generating module of the target device can generate a corresponding protocol response message based on whether the candidate device selected by the target selecting module of the target device is the first wireless device (step 550). In this embodiment, the candidate device selected by the target selecting module of the target device is indeed the first wireless device (the wireless device 421). Therefore, the response generating module of the target device can follow the procedure in FIG. 5 to first determine that the target device has selected the candidate device (step 551), then to determine that the first wireless device is the candidate device selected by the target selecting module (step 555), and to generate a protocol response message meaning protocol confirmed (step 557).

After the response generating module of the target device generates the protocol response message, the transmitting module of the target device can send a response packet containing the protocol response message back to the candidate device, the first wireless device 421 (step 559). The response generating module of the target device can first package the protocol response message meaning protocol confirmed into the response packet before sending the response packet to the first wireless device according to wireless network technology. Thus, the response packet transmitted by the transmitting module of the wireless device contains the protocol response message.

After the transmitting module of the first wireless device (the wireless device 421) receives the response packet returned by the target device (the wireless device 412), the wireless device 421 checks the contents of the protocol response message in the response packet (step 561). In this embodiment, the protocol response message contained in the response packet means protocol confirmed. Thus the connection processing module of the wireless device 421 can establish a connection with the target device, i.e., the wireless device 412 (step 580). The connection processing module of the wireless device 421 can use the device information (e.g., MAC address) thereof and the device information (also MAC address) of the target device (the wireless device 412) recorded in the response packet to determine whether to actively establish the connection with the wireless device 412. Using this mechanism, the invention can determine whether the wireless device acts as an access point (AP) or a client without employing additional messages. Besides, the AP and the client can use the information obtained during the protocol request and protocol response processes to generate a unique connection parameter shared only between the AP and the client. For example, the original SSID is appended with the last three digits of the MAC address of the AP or the connection confirmation password is modified. Therefore, any pair of wireless devices with an agreed protocol are using unique connection information, preventing the client from connecting to the wrong AP.

Afterwards, whether the wireless device 421 actively or passively connects to the wireless device 412, carriage 410 and carriage 420 can always establish the connection.

The following uses a second embodiment to explain the disclosed system and method. Please continue to refer to FIG. 3. The current embodiment follows the first embodiment. However, carriages of the train in this embodiment are rearranged. As shown in FIGS. 6A and 6B, carriage 410 departs from carriage 420 and connects to carriage 450.

After carriage 410 departs from carriage 420 and before carriage 410 connects to carriage 450, the wireless device 451 and the wireless device 452 on carriage 450 are initiated. Suppose the signal quality detecting module of the wireless device 451 can detect the signal quality of the wireless device 421 (step 501). If the duration of the signal quality of the wireless device 421 detected by the signal quality detecting module of the wireless device 451 no less than a threshold reaches the first specific time, the target selecting module of the wireless device 451 can select the wireless device 421 (step 520) and use the selected wireless device 421 as the target device.

After the target selecting module of the wireless device 451 selects the target device (the wireless device 421), the connection processing module of the wireless device 451 can transmit the request packet containing the protocol request message via the transmitting module to the target device (i.e., the wireless device 421) (step 539).

After the transmitting module of the target device (i.e., the wireless device 421) receives the request packet containing the protocol request message sent from the wireless device 451, the response generating module of the wireless device 421 can generates a protocol response message based on whether the candidate device selected by the target selecting module of the target device is the first wireless device (step 550). In this embodiment, the candidate device selected by the target selecting module of the target device is indeed the wireless device 412 instead of the wireless device 451 that sends the request packet. Therefore, the response generating module of the target device can follow the procedure shown in FIG. 5 to generate a protocol response message meaning protocol rejected (step 556).

After the response generating module of the target device (the wireless device 421) generates the protocol response message, the transmitting module thereof can return the response packet containing the protocol response message to the wireless device that sends the protocol request message, i.e., the wireless device 451 (step 559).

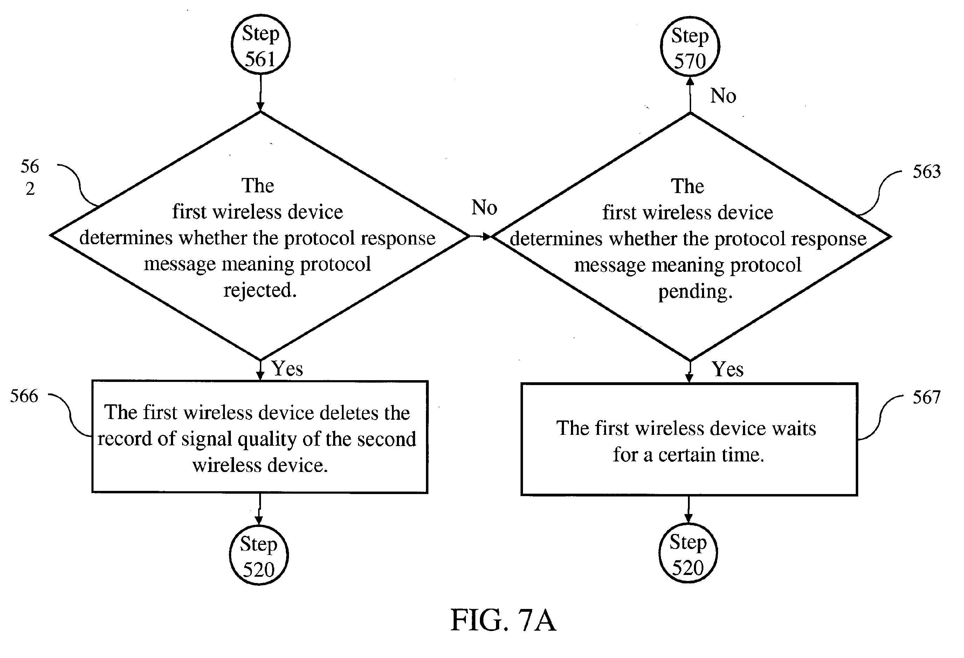

After the transmitting module of the wireless device 451 receives the response packet returned from the target device (the wireless device 421), the wireless device 421 can check the contents of the protocol response message in the response packet (step 561). In this embodiment, the protocol response message in the response packet means protocol rejected. Therefore, after the connection processing module of the wireless device 421 follows the procedure of FIG. 7A to determine that the protocol response message means protocol rejected (step 562), the signal quality detecting module of the wireless device 451 deletes the signal quality record of the wireless device 421 (step 566).

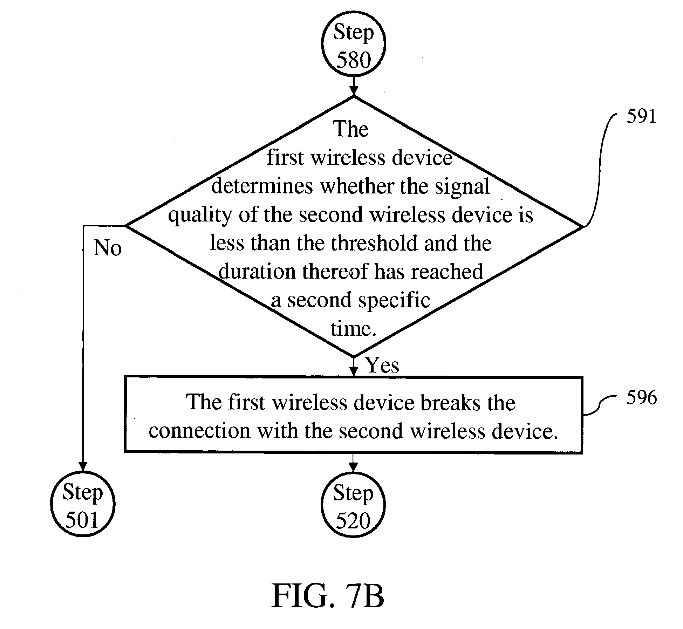

Afterwards, as carriage 410 departs from carriage 420, the connection processing module of the wireless device 412 follows the procedure shown in FIG. 7B to determine whether the duration of the signal quality of the wireless device 421 is less than a threshold and whether the time of signal quality less than the threshold has reached a second specific time (step 591). When the connection processing module of the wireless device 412 determines that the duration of the signal quality of the wireless device 421 being less than a threshold has reached the second specific time, the connection processing module of the wireless device 412 can break the connection with the wireless device 421 (step 596). The target selecting module of the wireless device 412 is notified to select a new target device (step 520).

When carriage 450 slides along the track to between carriage 410 and carriage 420, the signal quality detecting module of the wireless device 412 detects that the signal quality of the wireless device 451 becomes better. When the target selecting module of the wireless device 412 determines that the signal quality of the wireless device 451 is not less than a threshold and has reached the first specific time, the wireless device 451 is selected (step 520) as the new target device.

After the target selecting module of the wireless device 412 selects the target device (the wireless device 451), the connection processing module of the wireless device 412 can transmit the request packet containing the protocol request message via the transmitting module to the target device (step 539), i.e., the wireless device 451.

After the transmitting module of the target device (the wireless device 451) receives the request packet containing the protocol request message sent from the wireless device 412, the response generating module of the wireless device 451 can generate the corresponding protocol response message based on whether the candidate device selected by the target selecting module of the target device is the wireless device 412 (step 550). In this embodiment, suppose the candidate device selected by the target selecting module of the wireless device 451 is indeed the wireless device 412. Therefore, the response generating module of the wireless device 451 can follow the procedure in FIG. 5. The response generating module of the wireless device 451 first generates a protocol response message meaning protocol confirmed (step 557), then sends the response packet containing the protocol response message via the transmitting module of the wireless device 451 to the wireless device that sends the protocol request message, i.e., the wireless device 412 (step 559).

After the transmitting module of the wireless device 412 receives the response packet returned from the target device (the wireless device 451), the wireless device 412 can check the contents in the protocol response message of the response packet (step 561). In this embodiment, the protocol response message in the response packet means protocol confirmed. Therefore, the connection processing module of the wireless device 412 can establish a connection with the target device, i.e., the wireless device 451 (step 580). And the connection between carriage 410 and carriage 450 can be successfully accomplished without modifying settings of the wireless devices thereof, achieving the goal of automatically update the topology. In other words, this invention provides a mechanism to automatically adjust topology.

In the above-mentioned embodiment, if the target selecting module of the wireless device 451 has not selected a candidate device (step 551), the response generating module of the wireless device 451 generates a response message meaning protocol pending (step 552) and sends the response packet containing the protocol response message via the transmitting module of the wireless device 451 to the wireless device 412 that sends the protocol request message (step 559).

After the transmitting module of the wireless device 412 receives the response packet returned from the target device (the wireless device 451), the wireless device 412 can determine that the protocol response message contained in the response packet means protocol pending (step 563). After waiting a period of time (step 567), the target selecting module of the wireless device 412 reselects a target device with the best signal quality and the duration of the signal quality is not less than a threshold reaching the first specific time (step 520) until carriage 410 and carriage 450 establishes a connection.

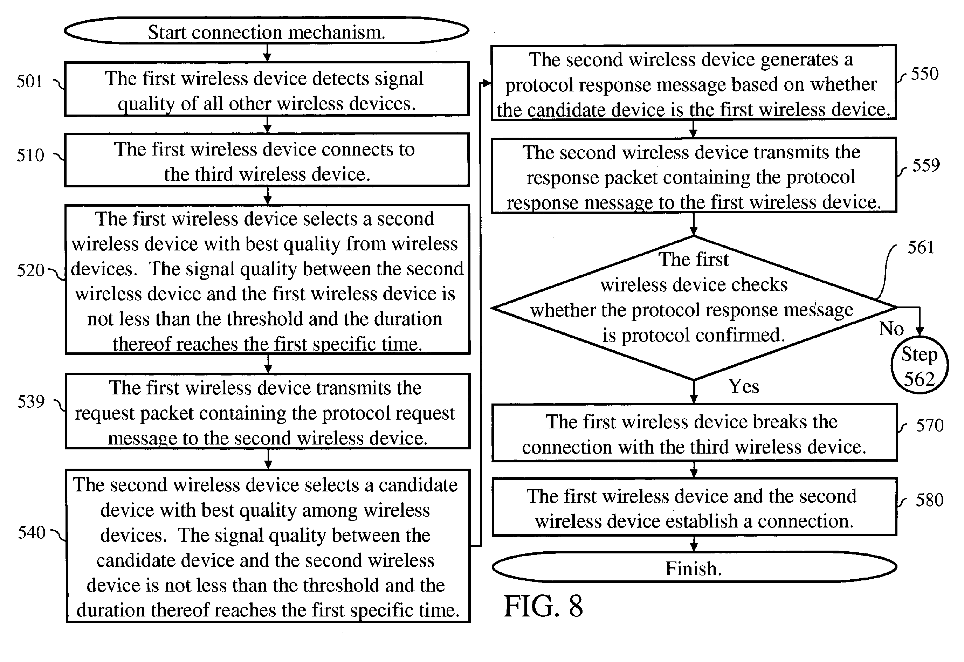

The following uses a third embodiment to explain the disclosed system and method. Please refer to FIG. 8 for a flowchart. This embodiment follows the second embodiment, with emphasis on elucidating the process of another connection switch.

In this embodiment, suppose the distance between carriage 410 and carriage 420 becomes larger. At the same time, carriage 450 moves along the track toward carriage 410. When carriage 450 moves to between carriage 410 and carriage 420, if the connection between the wireless device 412 in carriage 410 and the wireless device 421 in carriage 420 is still not broken, i.e., the wireless device 412 and the wireless device 421 are still connected (step 510).

The transmitting module of the wireless device 421 continuously receives wireless packets. That is to say, the signal quality detecting module of the wireless device 421 continuously detects the signal quality of all the wireless devices (step 501). The signal quality of the wireless device 452 becomes better as carriage 450 gets closer, whereas the signal quality of the wireless device 412 becomes worse as carriage 410 gets farther away. The target selecting module of the wireless device 421 can select the wireless device 452 as the new target device after the duration of the signal quality of the wireless device 452 being not less than a threshold is determined to have reached the first specific time (step 520).

After the target selecting module of the wireless device 421 selects the new target device (the wireless device 452), the connection processing module of the wireless device 421 can send the request packet containing the protocol request message to the target device, i.e., the wireless device 452 (step 539).

After the transmitting module of the target device (the wireless device 452) receives the request packet containing the protocol request message from the wireless device 421, the response generating module of the wireless device 452 can generates the corresponding protocol response message based on whether the candidate device selected by the target selecting module of the target device is the wireless device 421 (step 550). In this embodiment, suppose the candidate device selected by the target selecting module of the wireless device 452 is indeed the wireless device 421. The response generating module of the wireless device 452 can follow the procedure of FIG. 5 to generate a protocol response message meaning protocol confirmed (step 557).

After the response generating module of the wireless device 452 generates the protocol response message, the transmitting module of the wireless device 452 can send the response packet containing the protocol response message back to the wireless device that sends the protocol request message, the wireless device 421 (step 559).

After the transmitting module of the wireless device 421 receives the response packet returned from the target device (the wireless device 452), the wireless device 421 can check the contents of the protocol response message contained in the response packet (step 561). In this embodiment, the protocol response message contained in the response packet means protocol confirmed. Therefore, the connection processing module of the wireless device 421 can first break the connection with the wireless device 412 (step 570) and establish a connection with the target device, the wireless device 452 (step 580). As a result, the wireless devices on carriage 410 and carriage 450 accomplish a connection without modifying settings of the wireless devices, automatically updating the topology. Likewise, the wireless device 412 can first break the connection with the wireless device 421 and then connect to the wireless device 451 between carriage 410 and carriage 450. In this way, the wireless devices can adjust the best topology automatically.

In summary, the invention differs from the prior art in that the wireless device selects as the candidate device another wireless device with the best signal quality and the duration of the signal quality is not less than a threshold reaching the specific time. If the selected candidate device also selects the wireless device, the two wireless devices establish a unique connection. Using this technique, the invention solves the problem in the prior art that wireless devices cannot establish a stable linear topology in a dynamical and complicated environment. With the invention, wireless devices automatically establish a stable linear topology in a dynamical and complicated environment, and update the topology timely to adapt to environmental changes.

Moreover, the disclosed method for selecting a connection target based on signal quality can be implemented in hardware, software or the combination thereof. It can also be implemented in a centralized way in a computer system or in a distributive way among several connected computer systems.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. A method for selecting a connection target based on signal quality for two wireless devices (100, 200) of a plurality of wireless devices to establish a unique connection, the method comprising the steps of:
using (501) a first wireless device (100) to detect signal quality of all other wireless devices;
using (520) the first wireless device (100) to select a second wireless device (200) with best signal quality from the wireless devices as target device, wherein the duration of the signal quality between the second wireless device (200) and
the first wireless device (100) is not less than a threshold and reaches a first specific time;
sending (539) a request packet containing a protocol request message from the first wireless device (100) to the second wireless device (200);
using (540) the second wireless device (200) to select a candidate device with best signal quality from the wireless devices, wherein the duration of
the signal quality between the candidate device and the second wireless device (200) is not less than a threshold and reaches the first specific time;
using (550) the second wireless device (200) to generate a protocol response message based on whether the first wireless device (100) is the candidate device;
sending (559) a response packet containing the protocol response message from the second wireless device (200) to the first wireless device (100); and
establishing (580) a connection between the first wireless device (100) and the second wireless device (200) after the first wireless device (100) checks that the protocol response message means protocol confirmed.

2. The method for selecting a connection target based on signal quality of claim 1 further comprising the step of connecting (510) the first wireless device (100) with a third wireless device before the step (520) of using the first wireless device (100) to select a second wireless device (200) with best signal quality from the wireless devices and the step (570) of breaking the connection between the first wireless device (100) and the third wireless device before the step of establishing a connection between the first wireless device (100) and the second wireless device (200).

3. The method for selecting a connection target based on signal quality of claim 1 further comprising the step (596) of breaking the connection between the first wireless device (100) and the second wireless device (200) after the first wireless device (100) determines that the duration of the signal quality of the second wireless device is less (200) than a threshold and reaches a second specific time, and re-selecting another wireless device with the best signal quality as the second wireless device (200) from the wireless devices.

4. The method for selecting a connection target based on signal quality of claim 1, wherein the step (580) of establishing a connection between the first wireless device (100) and the second wireless device (200) is achieved by using the first wireless device (100) to determine whether to actively connect to the second wireless device (200) or passively wait for the second wireless device (200) to connect according to the device information of the second wireless device (200) recorded in the response packet.

5. The method for selecting a connection target based on signal quality of claim 1, wherein the step (580) of establishing a connection between the first wireless device (100) and the second wireless device (200) is achieved by using unique connection information generated by the first wireless device (100) or the second wireless device (200) based on device information of the first wireless device (100) and device information of the second wireless device (200).

6. The method for selecting a connection target based on signal quality of claim 1 further comprising the step of preventing the selection of the second wireless device (200) as the candidate device within a certain time after the first wireless device (100) checks that the protocol response message means protocol rejected and continuously selecting the wireless device with the best signal quality as the second wireless device (200) and the step (539) of sending the request packet to the selected second wireless device (200) after a certain time after the first wireless device (100) checks that the protocol response message means protocol pending.

7. The method for selecting a connection target based on signal quality of claim 1 further comprising the step of preventing the selection of the second wireless device (200) as the candidate device within a certain time after the first wireless device (100) determines that the response packet does not contain the protocol response message before the step of establishing a connection between the first wireless device (100) and the second wireless device (200).

8. A system adapted to select a connection target based on signal quality for two wireless devices (100, 200) of a plurality of wireless devices to establish a unique connection, comprising:
a first wireless device (100) adapted to detect signal quality of all other wireless devices, to select one wireless device with best signal quality as a target device, with the duration of the signal quality between the target device and the first wireless device being not less than a threshold and reaching a first specific time, and to send a request packet containing a protocol request message; and
a second wireless device (200) as the target device adapted to detect signal quality of all other wireless devices, to select one wireless device with best signal quality as a candidate device, with the duration of the signal quality between the candidate device and the second wireless device (200) being not less than a threshold and reaching a first specific time, to receive the protocol request message sent from the first wireless device (100), to generate a corresponding protocol response message based on whether the first wireless device (100) is the candidate device, and sending a response packet containing the protocol response message to the first wireless device (100);
wherein after the second wireless device (200) determines that the first wireless device (100) is the candidate device, the protocol response message means protocol confirmed; after the second wireless device (200) determines that the first wireless device (100) is not the candidate device, the protocol response message means protocol rejected; after the second wireless device (200) has not found the candidate device, the protocol response message means protocol pending; the first wireless device (100) adapted to establish a connection with the second wireless device (200) after the first wireless device (100) checks that the protocol response message is protocol confirmed; the first wireless device (100) adapted to prevent the selection of the second wireless device (200) as the target device within a certain time after the first wireless device (100) checks that the protocol response message is protocol rejected and adapted to continue to select a new target device among the other wireless devices as the second wireless device (200); and the first wireless device (100) adapted to re-sends the request packet to the selected second wireless device (200) after a certain time after the first wireless device (100) checks that the protocol response message is protocol pending.

9. The system adapted to selecting a connection target based on signal quality of claim 8, wherein the first wireless device (100) adapted to break the connection with the second wireless device (200) after determining that the signal quality of the second wireless device (200) is less than a threshold and that the duration thereof has reached a second specific time, and to send the request packet to the newly selected second wireless device (200).

10. The system adapted to select a connection target based on signal quality of claim 8, wherein the first wireless device (100) is adapted to determines whether to actively connect to the second wireless device (200) or to passively wait for the second wireless device (200) to connect based on the device information of the second wireless device (200) recorded in the response packet.

11. The system adapted to select a connection target based on signal quality of claim 8, wherein the first wireless device (100) is adapted to use unique connection information to connect to the second wireless device (200), the connection information being generated by the first wireless device (100) or the second wireless device (200) based on device information of the first wireless device (100) and device information of the second wireless device (200).

12. The system adapted to select a connection target based on signal quality of claim 8, wherein the first wireless device (100) is adapted to prevent the selection of the second wireless device (200) as the target device after determining that the first response packet does not contain a protocol response message.

13. The system adapted to select a connection target based on signal quality of claim 8, wherein the first wireless device (100) is adapted to break connections to other wireless devices before connecting to the second wireless device (200).

14. A wireless device (300) adapted to select a connection target based on signal quality, comprising:
a signal quality detecting module (320) for detecting signal quality of all other wireless devices;
a target selecting module (330) for selecting another wireless device with best signal quality from all the wireless devices as a candidate device,
wherein the duration of the signal quality between the candidate device and the wireless device is not less than a threshold and the duration thereof reaches a certain time;
a transmitting module (310) for transmitting a first request packet containing a first protocol request message to the candidate device, receiving a first response packet containing a first protocol response message from the candidate device, receiving a second request packet containing a second protocol request message, and returning a second response message containing a second protocol response message;
a response generating module (350) for generating the second protocol response message meaning protocol confirmed after determining that the wireless device sending the second request packet is the candidate device, generating the second protocol response message meaning protocol rejected after determining that the wireless device sending the second request packet is not the candidate device, and generating the second protocol response message meaning protocol pending after determining that the target selecting module (330) has not selected the candidate device; and
a connection processing module (360) for checking the first protocol response message, wherein the connection processing module (360) is adapted to connect with the candidate device when the first protocol response message means protocol confirmed, the signal quality detecting module is adapted to (320) delete the record of the signal quality of the candidate device or the target selecting module (330) is adapted not to select the wireless device transmitting the first protocol response message as the candidate device within a certain time when the first protocol response message means protocol rejected, and the connection processing module (360) is adapted to re-send the first request packet via the transmitting module (310) to the candidate device currently selected by the target selecting module (330) after a certain time when the first protocol response message means protocol pending.

15. The wireless device adapted to select a connection target based on signal quality of claim 14, wherein the connection processing module (360) is adapted to break the connection with the candidate device after determining that the signal quality of the candidate device is less than a threshold and the duration thereof has reached a second specific time, the transmitting module (310) is adapted to send the first request packet to one wireless device with best signal quality among the wireless device as selected by the target selecting module (330).

16. The wireless device adapted to select a connection target based on signal quality of claim 14, wherein the connection processing module (360) is adapted to determine whether to actively connect to the candidate device or to passively wait for the candidate device to connect based on the device information of the candidate device recorded in the response packet.

17. The wireless device adapted to selecting a connection target based on signal quality of claim 14, wherein the connection processing module (360) is adapted to use unique connection information to connect with the candidate device, the connection information being generated by the connection processing module (360) or the candidate device based on the device information of the wireless device and the device information of the candidate device.

18. The wireless device adapted to select a connection target based on signal quality of claim 14, wherein the signal quality detecting module (320) is adapted to delete the record of the signal quality of the candidate device after the connection processing module (360) determines that the first response packet does not contain the protocol response message.

19. The wireless device adapted to selecting a connection target based on signal quality of claim 14, wherein the target selecting module (330) is adapted not to select the candidate device within a certain time after the connection processing module (360) determines that the first response packet does not contain the protocol response message.

20. The wireless device adapted to selecting a connection target based on signal quality of claim 14, wherein the connection processing module (360) is adapted to break connections of the wireless device to other wireless devices before connecting to the candidate device.

## Patentansprüche

1. Verfahren zur Auswahl eines Verbindungsziels basierend auf der Signalqualität zweier drahtloser Geräte (100, 200) aus einer Vielzahl drahtloser Geräte, um eine spezifische Verbindung aufzubauen, wobei das Verfahren die Schritte umfasst:
Verwenden (501) eines ersten drahtlosen Geräts (100) zur Detektion der Signalqualität aller anderen drahtlosen Geräte;
Verwenden (520) des ersten drahtlosen Geräts (100) zur Auswahl eines zweiten drahtlosen Geräts (200) mit bester Signal Qualität aus den drahtlosen Geräten als Zielgerät, wobei die Zeitdauer der Signalqualität zwischen dem zweiten drahtlosen Gerät (200) und dem ersten drahtlosen Gerät (100) nicht geringer als ein Schwellenwert ist und eine erste spezifische Zeit erreicht;
Senden (539) eines Anfragepakets, welches eine Protokollanfragenachricht enthält, von dem ersten drahtlosen Gerät (100) an das zweite drahtlose Gerät (200);
Verwenden (540) des zweiten drahtlosen Geräts (200) zur Auswahl eines Kandidatengeräts mit bester Signalqualität der drahtlosen Geräte, wobei die Zeitdauer der Signalqualität zwischen dem Kandidatengerät und dem zweiten drahtlosen Gerät (200) nicht geringer als ein Schwellenwert ist und die erste spezifische Zeit erreicht;
Verwenden (550) des zweiten drahtlosen Geräts (200) zur Erzeugung einer Protokollantwortnachricht basierend darauf, ob das erste drahtlose Gerät (100) das Kandidatengerät ist;
Senden (559) eines Antwortpakets, welches die Protokollantwortnachricht beinhaltet, von dem zweiten drahtlosen Gerät (200) an das erste drahtlose Gerät (100); und
Aufbauen (580) einer Verbindung zwischen dem ersten drahtlosen Gerät (100) und dem zweiten drahtlosen Gerät (200) nachdem das erste drahtlose Gerät (100) überprüft, dass die Protokollantvvortnachricht lautet, Protokoll bestätigt.

2. Verfahren zur Auswahl eines Verbindungsziels basierend auf der Signalqualität gemäß Anspruch 1, weiter umfassend den Schritt des Verbindens (510) des ersten drahtlosen Geräts (100) mit einem dritten drahtlosen Geräts vor dem Schritt (520) des Verwendens des ersten drahtlosen Geräts (100) zur Auswahl eines zweiten drahtlosen Geräts (200) mit bester Signalqualität der drahtlosen Geräte und dem Schritt (570) des Abbrechens der Verbindung zwischen dem ersten drahtlosen Gerät (100) und dem dritten drahtlosen Gerät vor dem Schritt des Aufbauens einer Verbindung zwischen dem ersten drahtlosen Gerät (100) und dem zweiten drahtlosen Gerät (200).

3. Verfahren zur Auswahl eines Verbindungsziels basierend auf der Signalqualität gemäß Anspruch 1, weiter umfassend den Schritt (596) des Abbrechens der Verbindung zwischen dem ersten drahtlosen Gerät (100) und dem zweiten drahtlosen Gerät (200) nachdem das erste drahtlose Gerät (100) bestimmt, dass die Zeitdauer der Signalqualität des zweiten drahtlosen Geräts (200) geringer als ein Schwellenwert ist und eine zweite spezifische Zeit erreicht, und das erneute Auswählen eines weiteren drahtlosen Geräts mit besserer Signalqualität als das zweite drahtlose Gerät (200) aus den drahtlosen Geräten.

4. Verfahren zur Auswahl eines Verbindungsziels basierend auf der Signalqualität gemäß Anspruch 1, wobei der Schritt (580) des Aufbauens einer Verbindung zwischen dem ersten drahtlosen Gerät (100) und dem zweiten drahtlosen Gerät (200) erreicht wird durch das Verwenden des ersten drahtlosen Geräts (100), um zu bestimmen, sich aktiv mit dem zweiten drahtlosen Gerät (200) zu verbinden oder passiv darauf zu warten, dass das zweite drahtlose Gerät (200) verbindet, gemäß der Gerätinformationen des zweiten drahtlosen Geräts (200), welche im Antwortpaket erfasst sind.

5. Verfahren zur Auswahl eines Verbindungsziels basierend auf der Signalqualität gemäß Anspruch 1, wobei der Schritt (580) des Aufbauens einer Verbindung zwischen dem ersten drahtlosen Gerät (100) und dem zweiten drahtlosen Gerät (200) erreicht wird durch das Verwenden spezifischer Verbindungsinformationen, welche durch das erste drahtlose Gerät (100) beziehungsweise das zweite drahtlose Gerät (200) erzeugt werden, basierend auf der Geräteinformation des ersten drahtlosen Geräts (100) und der Geräteinformation des zweiten drahtlosen Geräts (200).

6. Verfahren zur Auswahl eines Verbindungsziels basierend auf der Signalqualität gemäß Anspruch 1, weiter umfassend den Schritt des Vermeidens der Auswahl des zweiten drahtlosen Geräts (200) als Kandidatengerät innerhalb einer bestimmten Zeitspanne nachdem das erste drahtlose Gerät (100) prüft, dass die Protokollantwortnachricht bedeutet, Protokoll abgelehnt, und kontinuierliches Auswählen des drahtlosen Geräts mit der besten Signalqualität als zweites drahtloses Gerät (200) und den Schritt (539) des Sendens des Anfragepakets an das ausgewählte zweite drahtlose Gerät (200) nach einer gewissen Zeitspanne, nach der das erste drahtlose Gerät (100) überprüft hat, dass die Protokollantwortnachricht bedeutet, Protokoll anhängig.

7. Verfahren zur Auswahl eines Verbindungsziels basierend auf der Signalqualität gemäß Anspruch 1, weiter umfassend den Schritt des Vermeidens der Auswahl des zweiten drahtlosen Geräts (200) als Kandidatengerät innerhalb einer bestimmten Zeitspanne nachdem das erste drahtlose Gerät (100) bestimmt hat, dass das Antwortpaket nicht die Protokollantwortnachricht enthält, vor dem Schritt des Aufbauens einer Verbindung zwischen dem ersten drahtlosen Gerät (100) und dem zweiten drahtlosen Gerät (200).

8. System, das geeignet ist, ein Verbindungsziel zum Aufbauen einer spezifischen Verbindung basierend auf der Signalqualität für zwei drahtlose Geräte (100, 200) aus einer Vielzahl von drahtlosen Geräten auszuwählen, umfassend:
ein erstes drahtloses Gerät (100) geeignet zur Detektion der Signalqualität aller weiteren drahtlosen Geräte und zur Auswahl eines drahtlosen Geräts mit bester Signalqualität als Zielgerät, wobei die Zeitdauer der Signalqualität des Zielgeräts und des ersten drahtlosen Geräts nicht geringer als ein Schwellenwert ist und eine erste spezifische Zeit erreicht, und zum Senden eines eine Protokollanfragenachricht beinhaltenden Anfragepakets; und
ein zweites drahtloses Gerät (200) als Zielgerät, welches geeignet ist zur Detektion der Signalqualität aller anderen drahtlosen Geräte, zur Auswahl eines drahtlosen Geräts mit bester Signalqualität als Kandidatengerät, wobei die Zeitdauer der Signalqualität zwischen Kandidatengerät und dem zweiten drahtlosen Gerät (200) nicht weniger als ein Schwellenwert beträgt und eine erste spezifische Zeit erreicht, zum Empfang der vom ersten drahtlosen Gerät (100) gesendeten Protokollanfragenachricht, zur Erzeugung einer entsprechenden Protokollantwartnachricht basierend darauf, ob das erste drahtlose Gerät (100) das Kandidatengerät ist, und zum Senden eines die Protokollantwortnachricht beinhaltenden Antwortpakets an das erste drahtlose Gerät (100),
wobei nachdem das zweite drahtlose Gerät (200) bestimmt, dass das erste drahtlose Gerät (100) das Kandidatengerät ist, die Protokollantworknachricht bedeutet, Protokoll bestätigt, wobei nachdem das zweite drahtlose Gerät (200) bestimmt, dass das erste drahtlose Gerät (100) nicht das Kandidatengerät ist, die Protokollantwortnachricht bedeutet, Protokoll abgelehnt, wobei nachdem das zweite drahtlose Gerät (200) das Kandidatengerät nicht gefunden hat, die Protokollantwortnachricht bedeutet, Protokoll anhängig, wobei das erste drahtlose Gerät (100) dazu geeignet ist, eine Verbindung mit dem zweiten drahtlosen Gerät (200) aufzubauen, nachdem das erste drahtlose Gerät (100) überprüft hat, dass die Protokollantwortnachricht bedeutet, Protokoll bestätigt, wobei das erste drahtlose Gerät (100) dazu geeignet ist, eine Auswahl des zweiten drahtlosen Geräts (200) als Kandidatengerät innerhalb einer bestimmten Zeit zu verhindern, nachdem das erste drahtlose Gerät (100) überprüft hat, dass die Protokollantwortnachricht bedeutet, Protokoll abgelehnt, und wobei es geeignet ist, die Auswahl eines neuen Zielgeräts als das zweite drahtlose Gerät (200) unter den anderen drahtlosen Geräten fortzusetzen, und wobei das erste drahtlose Gerät (100) geeignet ist, das Antwortpaket an das ausgewählte zweite drahtlose Gerät (200) nach einer gewissen Zeit zurückzusenden, nachdem das erste drahtlose Gerät (100) überprüft hat, dass die Protokollantwortnachricht bedeutet, Protokoll anhängig.

9. System geeignet zur Auswahl eines Verbindungsziels basierend auf der Signalqualität gemäß Anspruch 8, wobei das erste drahtlose Gerät (100) dazu geeignet ist, die Verbindung mit dem zweiten drahtlosen Gerät (200) zu unterbrechen, nachdem festgestellt wurde, dass die Signalqualität des zweiten drahtlosen Geräts (200) unterhalb eines Schwellenwerts liegt und dass die Zeitdauer der Signalqualität eine zweite spezifische Zeit erreicht, und dazu geeignet ist, und das Antwortpaket an das neu ausgewählte zweite drahtlose Gerät (200) zu senden.

10. System geeignet zur Auswahl eines Verbindungsziels basierend auf der Signalqualität gemäß Anspruch 8, wobei das erste drahtlose Gerät (100) dazu geeignet ist, zu bestimmen, aktiv mit dem zweiten drahtlosen Gerät (200) zu verbinden oder passiv darauf zu warten, dass das zweite drahtlose Gerät (200) verbindet, basierend auf der im Antwortpaket dokumentierten Geräteinformation des zweiten drahtlosen Geräts (200).

11. System geeignet zur Auswahl eines Verbindungsziels basierend auf der Signalqualität gemäß Anspruch 8, wobei das erste drahtlose Gerät (100) dazu geeignet ist, spezifische Verbindungsinformationen zu nutzen, um mit dem zweiten drahtlosen Gerät (200) zu verbinden, wobei die Verbindungsinformationen durch das erste drahtlose Gerät (100) oder das zweite drahtlose Gerät (200) basierend auf der Geräteinformation des ersten drahtlosen Geräts (100) und der Geräteinformation des zweiten drahtlosen Geräts (200) erzeugt werden.

12. System geeignet zur Auswahl eines Verbindungsziels basierend auf der Signalqualität gemäß Anspruch 8, wobei das erste drahtlose Gerät (100) dazu geeignet ist, die Auswahl des zweiten drahtlosen Geräts (200) als Zielgerät zu verhindern, nachdem bestimmt wurde, dass das erste Antwortpaket keine Protokollantwortnachricht beinhaltet.

13. System geeignet zur Auswahl eines Verbindungsziels basierend auf der Signalqualität gemäß Anspruch 8, wobei das erste drahtlose Gerät (100) dazu geeignet ist, Verbindungen zu anderen drahtlosen Geräten abzubrechen bevor es mit dem zweiten drahtlosen Gerät (200) verbindet.

14. Drahtloses Gerät (300) geeignet, ein Verbindungsziel basierend auf der Signalqualität auszusuchen, umfassend:
ein Signalqualitäts-Detektiermodul (320) zur Detektion der Signalqualität aller anderer drahtloser Geräte;
ein Ziel-Auswahlmodul (330) zur Auswahl eines weiteren drahtlosen Geräts mit bester Signalqualität als Kandidatengerät aus allen drahtlosen Geräten, wobei die Zeitdauer der Signalqualität zwischen dem Kandidatengerät und dem drahtlosen Gerät nicht geringer als ein Schwellenwert ausfällt und die Zeitdauer somit eine bestimmte Zeit erreicht;
ein Übertragungsmodul (310) zum Übertragen eines eine erste Protokollanfragenachricht beinhaltenden ersten Anfragepakets an das Kandidatengerät, zum Empfangen eines eine erste Protokollantwortnachricht beinhaltenden ersten Antwortpakets vom Kandidatengerät, zum Empfangen eines eine zweite Protokollanfragenachricht beinhaltenden zweiten Anfragepakets, und zum Wiedergeben eines eine zweite Protokollantwortnachricht beinhaltenden zweiten Antwortpakets;
ein Antworterzeugungsmodul (350) zur Erzeugung der zweiten Protokollantwortnachricht, mit der Bedeutung, Protokoll bestätigt, nachdem bestimmt wurde, dass das drahtlose Gerät, welches das zweite Anfragepaket sendet, das Kandidatengerät ist, und zur Erzeugung der zweiten Protokollantwortnachricht, mit der Bedeutung, Protokoll abgelehnt, nachdem bestimmt wurde, dass das drahtlose Gerät, welches das zweite Anfragepaket sendet, nicht das Kandidatengerät ist, und zur Erzeugung der zweiten Protokollantwortnachricht, mit der Bedeutung, Protokoll anhängig, nachdem bestimmt wurde, dass das Ziel-Auswahlmodul (330) kein Kandidatengerät ausgewählt hat; und
ein Verbindungsbearbeitungsmodul (360) zur Überprüfung der ersten Protokollantwortnachricht, wobei das Verbindungsbearbeitungsmodul (360) geeignet ist, mit dem Kandidatengerät zu verbinden, wenn die erste Protokollantwortnachricht bedeutet, Protokoll bestätigt, wobei das Signaiqualitats - Detektiermodul (320) dazu geeignet ist, die Aufzeichnung der Signalqualität des Kandidatengeräts zu löschen, oder das Ziel-Auswahlmodul (330) ist geeignet,
das drahtlose Gerät, welches die erste Protokollantwortnachricht überträgt, innerhalb einer bestimmten Zeit nicht als Kandidatengerät auszuwählen, wenn die erste Protokollantwortnachricht bedeutet, Protokoll abgelehnt, und das Verbindungsbearbeitungsmodul (360) ist geeignet, das erste Antwortpaket mittels des Übertragungsmoduls (310) an das gegenwärtig durch das ZielAuswahlmodul (330) ausgewählte Kandidatengerät nach einer bestimmten Zeit zurückzusenden, wenn die erste Protokollantwortnachricht bedeutet, Protokoll anhängig.

15. Drahtloses Gerät geeignet, ein Verbindungsziel basierend auf der Signalqualität auszuwählen, gemäß Anspruch 14, wobei das Verbindungsbearbeitungsmodul (360) geeignet ist, die Verbindung mit dem Kandidatengerät zu unterbrechen, nachdem bestimmt wurde, dass die Signalqualität des Kandidatengeräts geringer als ein Schwellenwert ist und die Zeitdauer eine zweite bestimmte Zeit erreicht hat, wobei das Übertragungsmodul (310) dazu geeignet ist, das erste Anfragepaket an ein drahtloses Gerät zu senden, welches die beste Signalqualität unter den drahtlosen Geräten besitzt und durch das Auswahlmodul (330) ausgewählt wurde.

16. Drahtloses Gerät geeignet, ein Verbindungsziel basierend auf der Signalqualität auszuwählen, gemäß Anspruch 14, wobei das Verbindungsbearbeitungsmodul (360) geeignet ist, zu entscheiden, entweder aktiv mit dem Kandidatengerät zu verbinden oder passiv darauf zu warten, dass das Kandidatengerät verbindet, basierend auf der im Antwortpaket dokumentierten Geräteinformation des Kandidatengeräts.

17. Drahtloses Gerät geeignet, ein Verbindungsziel basierend auf der Signalqualität auszuwählen, gemäß Anspruch 14, wobei das Verbindungsbearbeitungsmodul (360) geeignet ist, ein spezifische Verbindungsinformationen zu nutzen, um mit dem Kandidatengerät zu verbinden, wobei die Verbindungsinformationen durch das Verbindungsbearbeitungsmodul (360) oder das Kandidatengerät erzeugt werden, basierend auf der Geräteinformation des drahtlosen Geräts und der Geräteinformation des Kandidatengeräts.

18. Drahtloses Gerät geeignet, ein Verbindungsziel basierend auf der Signalqualität auszuwählen, gemäß Anspruch 14, wobei das Signalqualitäts-Detektiermodul (320) geeignet ist, die Signalqualität des Kandidatengeräts aufzuzeichnen nachdem das Verbindungsbearbeitungsmodul (360) bestimmt hat, dass das erste Antwortpaket keine Protokollantwortnachricht enthält.

19. Drahtloses Gerät geeignet, ein Verbindungsziel basierend auf der Signalqualität auszuwählen, gemäß Anspruch 14, wobei das Auswahlmodul (330) geeignet ist, innerhalb einer bestimmten Zeit das Kandidatengerät nicht auszuwählen, nachdem das Verbindungsbearbeitungsmodul (360) bestimmt hat, dass das erste Antwortpaket keine Protokollantwortnachricht enthält

20. Drahtloses Gerät geeignet, ein Verbindungsziel basierend auf der Signalqualität auszuwählen, gemäß Anspruch 14, wobei das Verbindungsbearbeitungsmodul (360) geeignet ist, die Verbindung des drahtlosen Geräts zu anderen drahtlosen Geräten zu unterbrechen bevor es mit dem Kandidatengerät verbindet.

## Revendications

1. Procédé de sélection d'une cible de connexion basée sur une qualité de signal pour deux dispositifs sans fil (100, 200) d'une pluralité de dispositifs sans fil pour établir une connexion unique, le procédé comprenant les étapes :
d'utilisation (501) d'un premier dispositif sans fil (100) pour détecter la qualité du signal de tous les autres dispositifs sans fil ;
d'utilisation (520) du premier dispositif sans fil (100) pour sélectionner un second dispositif sans fil (200) avec la meilleure qualité de signal des dispositifs sans fil comme dispositif cible, la durée de la qualité du signal entre le second dispositif sans fil (200) et le premier dispositif sans fil (100) n'étant pas inférieure à un seuil et atteignant un premier temps spécifique ;
d'émission (539) d'un paquet de requêtes contenant un message de demande de protocole du premier dispositif sans fil (100) au second dispositif sans fil (200) ;
d'utilisation (540) du second dispositif sans fil (200) pour sélectionner un dispositif candidat avec la meilleure qualité de signal des dispositifs sans fil, la durée de la qualité du signal entre le dispositif candidat et le second dispositif sans fil (200) n'étant pas inférieure à un seuil et atteignant le premier temps spécifique ;
d'utilisation (200) du second dispositif sans fil (200) pour générer un message de réponse de protocole dépendant de si le premier dispositif sans fil (100) est le dispositif candidat ;
d'émission (559) d'un paquet de réponses contenant le message de réponse de protocole du second dispositif sans fil (200) au premier dispositif sans fil (100) et d'établissement (580) d'une connexion entre le premier dispositif sans fil (100) et le second dispositif sans fil (200) après que le premier dispositif sans fil (100) contrôle que le message de réponse de protocole signifie protocole confirmé.

2. Procédé de sélection d'une cible de connexion basée sur une qualité de signal selon la revendication 1 comprenant de plus l'étape de connexion (510) du premier dispositif sans fil (100) à un troisième dispositif sans fil avant l'étape (520) d'utilisation du premier dispositif sans fil (100) pour sélectionner un second dispositif sans fil (200) avec la meilleure qualité de signal des dispositifs sans fil et l'étape (570) de rupture de la connexion entre le premier dispositif sans fil (100) et le troisième dispositif sans fil avant l'étape d'établissement d'une connexion entre le premier dispositif sans fil (100) et le second dispositif sans fil (200).

3. Procédé de sélection d'une cible de connexion basée sur une qualité de signal selon la revendication 1 comprenant de plus l'étape (596) de rupture de la connexion entre le premier dispositif sans fil (100) et le second dispositif sans fil (200) après que le premier dispositif sans fil (100) détermine que la durée de la qualité du signal du second dispositif sans fil est inférieure (200) à un seuil et atteint un second temps spécifique et re-sélectionne un autre dispositif sans fil avec la meilleure qualité de signal comme second dispositif sans fil (200) parmi les dispositifs sans fil.

4. Procédé de sélection d'une cible de connexion basée sur une qualité de signal selon la revendication 1 dans lequel l'étape (580) d'établissement d'une connexion entre le premier dispositif sans fil (100) et le second dispositif sans fil (200) est obtenue en utilisant le premier dispositif sans fil (100) pour déterminer s'il faut se connecter activement au second dispositif sans fil (200) ou attendre passivement que le second dispositif sans fil (200) se connecte selon l'information de dispositif du second dispositif sans fil (200) enregistrée dans le paquet de réponses.

5. Procédé de sélection d'une cible de connexion basée sur une qualité de signal selon la revendication 1 dans lequel l'étape (580) d'établissement d'une connexion entre le premier dispositif sans fil (100) et le second dispositif sans fil (200) est obtenue en utilisant une information de connexion unique générée par le premier dispositif sans fil (100) ou le second dispositif sans fil (200) basée sur l'information de dispositif du premier dispositif sans fil (100) et l'information de dispositif du second dispositif sans fil (200).

6. Procédé de sélection d'une cible de connexion basée sur une qualité de signal selon la revendication 1 comprenant de plus l'étape d'empêcher la sélection du second dispositif sans fil (200) en tant que dispositif candidat dans un délai déterminé après que le premier dispositif sans fil (100) contrôle que le message de réponse de protocole signifie que protocole rejeté et sélectionne continuellement le dispositif sans fil avec la meilleure qualité de signal comme second dispositif sans fil (200) et l'étape (539) d'émission du paquet de requêtes au second dispositif sans fil sélectionné (200) après un certain temps après que le premier dispositif sans fil (100) contrôle que le message de réponse de protocole signifie protocole en attente.

7. Procédé de sélection d'une cible de connexion basée sur une qualité de signal selon la revendication 1 comprenant de plus l'étape d'empêcher la sélection du second dispositif sans fil (200) en tant que dispositif candidat dans un délai déterminé après que le premier dispositif sans fil (100) détermine que le paquet de réponses ne contient pas de message de réponse de protocole avant l'étape d'établissement d'une connexion entre le premier dispositif sans fil (100) et le second dispositif sans fil (200).

8. Système adapté pour sélectionner une cible de connexion basée sur la qualité de signal pour deux dispositifs sans fil (100, 200) d'une pluralité de dispositifs sans fil pour établir une connexion unique comprenant :
un premier dispositif sans fil (100) adapté pour détecter la qualité de signal de tous les autres dispositifs sans fil pour sélectionner un dispositif sans fil avec la meilleure qualité de signal comme dispositif cible, avec la durée de la qualité de signal entre le dispositif cible et le premier dispositif sans fil qui n'est pas inférieure à un seuil et atteindre un premier temps spécifique et pour envoyer un paquet de requêtes contenant un message de requête de protocole et
un second dispositif sans fil (200) comme dispositif cible adapté pour détecter la qualité de signal de tous les autres dispositifs sans fil pour sélectionner un dispositif sans fil avec la meilleure qualité de signal comme dispositif candidat,
avec la durée de la qualité de signal entre le dispositif candidat et le second dispositif sans fil (200) qui n'est pas inférieure à un seuil et atteindre un premier temps spécifique, pour recevoir le message de requête de protocole envoyé par le premier dispositif sans fil (100) pour générer un message de réponse de protocole correspondant basé sur le fait que le premier dispositif sans fil (100) est le dispositif candidat et envoyer un paquet de réponses contenant le message de réponse de protocole au premier dispositif sans fil (100),
dans lequel, après que le second dispositif sans fil (200) détermine que le premier dispositif sans fil (100) est le dispositif candidat, le message de réponse de protocole signifie protocole confirmé, après que le second dispositif sans fil (200) détermine que le premier dispositif sans fil (100) n'est pas le dispositif candidat, le message de réponse de protocole signifie protocole rejeté, après que le second dispositif sans fil (200) n'a pas trouvé le dispositif candidat, le message de réponse de protocole signifie protocole en attente, le premier dispositif sans fil (100) étant adapté pour établir une connexion avec le second dispositif sans fil (200) après que le premier dispositif sans fil (100) contrôle que le message de réponse de protocole est protocole confirmé, le premier dispositif sans fil (100) étant adapté pour empêcher la sélection du second dispositif sans fil (200) comme dispositif cible dans un certain temps, après que le premier dispositif sans fil (100) contrôle que le message de réponse de protocole est protocole rejeté et adapté pour continuer à sélectionner un nouveau dispositif cible parmi les autres dispositifs sans fil comme second dispositif sans fil (200) et le premier dispositif sans fil (100) adapté pour envoyer à nouveau le paquet de requêtes au second dispositif sans fil sélectionné (200) après un certain temps après que le premier dispositif sans fil (100) contrôle que le message de réponse de protocole est protocole en attente.

9. Système adapté pour sélectionner une cible de connexion basée sur la qualité de signal selon la revendication 8 dans lequel le premier dispositif sans fil (100) est adapté pour rompre la connexion avec le second dispositif sans fil (200) après avoir déterminé que la qualité du signal du second dispositif sans fil (200) est inférieure à un seuil et que la durée de celui-ci a atteint un second temps spécifique et pour envoyer le paquet de requêtes au second dispositif sans fil (200) nouvellement sélectionné.

10. Système adapté pour sélectionner une cible de connexion basée sur la qualité de signal selon la revendication 8 dans lequel le premier dispositif sans fil (100) est adapté pour déterminer s'il faut se connecter activement au second dispositif sans fil (200) ou attendre passivement que le second dispositif sans fil (200) se connecte selon l'information de dispositif du second dispositif sans fil (200) enregistrée dans le paquet de réponses.

11. Système adapté pour sélectionner une cible de connexion basée sur la qualité de signal selon la revendication 8 dans lequel le premier dispositif sans fil (100) est adapté pour utiliser une information de connexion unique pour se connecter au second dispositif sans fil (200), l'information de connexion étant générée par le premier dispositif sans fil (100) ou le second dispositif sans fil (200) sur la base de l'information de dispositif du premier dispositif sans fil (100) et de l'information de dispositif du second dispositif sans fil (200).

12. Système adapté pour sélectionner une cible de connexion basée sur la qualité de signal selon la revendication 8 dans lequel le premier dispositif sans fil (100) est adapté pour empêcher la sélection du second dispositif sans fil (200) en tant que dispositif cible après avoir déterminé que le premier paquet de réponses ne contient pas de message de réponse de protocole.

13. Système adapté pour sélectionner une cible de connexion basée sur la qualité de signal selon la revendication 8 dans lequel le premier dispositif sans fil (100) est adapté pour rompre la connexion avec d'autres dispositifs sans fil avant la connexion au second dispositif sans fil (200).

14. Dispositif sans fil (300) adapté pour sélectionner une cible de connexion basée sur la qualité du signal comprenant :
un module de détection de qualité de signal (320) pour détecter la qualité du signal de tous les autres dispositifs sans fil ;
un module de sélection de cible (330) pour sélectionner un autre dispositif sans fil avec la meilleure qualité de signal parmi tous les dispositifs sans fil comme dispositif candidat, dans lequel la durée de la qualité de signal entre le dispositif candidat et le dispositif sans fil n'est pas inférieure à un seuil et la durée de celui-ci atteint un certain temps ;
un module de transmission (310) pour transmettre un premier paquet de requêtes contenant un premier message de requête de protocole au dispositif candidat, recevoir un premier paquet de réponses contenant un premier message de réponse de protocole du dispositif candidat, recevoir un second paquet de requêtes contenant un second message de requête de protocole et renvoyer un second message de réponse contenant un second message de réponse de protocole ;
un module de génération de réponse (350) pour générer le second message de réponse de protocole signifiant protocole confirmé après avoir déterminé que le dispositif sans fil qui envoie le second paquet de requêtes est le dispositif candidat, générer le second message de réponse de protocole signifiant protocole rejeté après avoir déterminé que le dispositif sans fil qui envoie le second paquet de requêtes n'est pas le dispositif candidat et générer le second message de réponse de protocole signifiant protocole en attente après avoir déterminé que le module de sélection de cible (330) n'a pas sélectionné le dispositif candidat et
un module de traitement de connexion (360) pour contrôler le premier message de réponse de protocole, le module de traitement de connexion (360) étant adapté pour se connecter avec le dispositif candidat lorsque le premier message de réponse de protocole signifie protocole confirmé, le module de détection de qualité de signal (320) étant adapté pour effacer l'enregistrement de la qualité de signal du dispositif candidat ou le module de sélection de cible (330) étant adapté pour ne pas sélectionner le dispositif sans fil qui transmet le premier message de réponse de protocole comme dispositif candidat dans un certain temps lorsque le premier message de réponse de protocole signifie protocole rejeté et le module de traitement de connexion (360) étant adapté pour envoyer à nouveau le premier paquet de requêtes par l'intermédiaire du module de transmission (310) au dispositif candidat actuellement sélectionné par le module de sélection de cible (330) après un certain temps lorsque le premier message de réponse de protocole signifie protocole en attente.

15. Dispositif sans fil adapté pour sélectionner une cible de connexion basée sur la qualité du signal selon la revendication 14, le module de traitement de connexion (360) étant adapté pour rompre la connexion avec le dispositif candidat après avoir déterminé que la qualité du signal du dispositif candidat est inférieure à un seuil et la durée de celui-ci a atteint un second temps spécifique, le module de transmission (310) étant adapté pour envoyer le premier paquet de requêtes à un dispositif sans fil avec la meilleure qualité de signal parmi les dispositifs sans fil comme sélectionné par le module de sélection de cible (330).

16. Dispositif sans fil adapté pour sélectionner une cible de connexion basée sur la qualité du signal selon la revendication 14, le module de traitement de connexion (360) étant adapté pour déterminer s'il faut se connecter activement au dispositif candidat ou attendre passivement que le dispositif candidat se connecte sur la base de l'information de dispositif du dispositif candidat enregistrée dans le paquet de réponses.

17. Dispositif sans fil adapté pour sélectionner une cible de connexion basée sur la qualité du signal selon la revendication 14, le module de traitement de connexion (360) étant adapté pour utiliser une connexion unique pour se connecter au dispositif candidat, l'information de connexion étant générée par le module de traitement de connexion (360) ou le dispositif candidat sur la base de l'information de dispositif du dispositif sans fil (100) et de l'information de dispositif du dispositif candidat.

18. Dispositif sans fil adapté pour sélectionner une cible de connexion basée sur la qualité du signal selon la revendication 14, le module de détection de qualité de signal (320) effaçant l'enregistrement de la qualité de signal du dispositif candidat après que le module de traitement de connexion (360) détermine que le premier paquet de réponses ne contient pas le message de réponse de protocole.

19. Dispositif sans fil adapté pour sélectionner une cible de connexion basée sur la qualité du signal selon la revendication 14, le module de sélection de cible (330) étant adapté pour ne pas sélectionner le dispositif candidat dans un certain temps après que le module de traitement de connexion (360) détermine que le premier paquet de réponses ne contient pas le message de réponse de protocole.

20. Dispositif sans fil adapté pour sélectionner une cible de connexion basée sur la qualité du signal selon la revendication 14, le module de traitement de connexion (360) étant adapté pour rompre des connexions du dispositif sans fil à d'autres dispositifs sans fil avant de se connecter au dispositif candidat.
